# EUROPÄISCHE PATENTSCHRIFT

(11) **EP 2 643 677 B1**
(45) Veröffentlichungstag und Bekanntmachung des Hinweises auf die Patenterteilung: **04.04.2018**
(21) Anmeldenummer: 11794064.3
(22) Anmeldetag: 22.11.2011
(51) Int. Cl.: G01N 3/04, G01N 3/02, G01N 35/00

(54) **Prüfeinrichtung mit Probenmagazin zur Durchführung verschiedenartiger Belastungsversuche**
Testing device with magazine for conducting various kinds of loading tests
Dispositif d'essai avec magasin pour effectuer des essais de charge de façons divers

(30) Priorität: 22.11.2010 DE 102010061742
(43) Veröffentlichungstag der Anmeldung: 02.10.2013
(73) Patentinhaber: NETZSCH GABO Instruments GmbH, 95100 Selb (DE)
(72) Erfinder: GADDUM, Ronald, R., 29693 Ahlden (DE)
(74) Vertreter: Flügel Preissner Schober Seidel
(86) Internationale Anmeldenummer: PCT/EP2011/070653
(87) Internationale Veröffentlichungsnummer: WO 2012/069459

(56) Entgegenhaltungen:
- EP-A2- 0 750 171
- CN-Y- 201 188 077
- CN-Y- 201 215 537
- CN-Y- 201 215 537
- DE-A1-102009 010 431
- JP-U- S5 635 043
- US-A- 2 587 226
- US-A1- 2009 120 308

## Beschreibung

Die Erfindung betrifft eine Prüfeinrichtung mit einem Probenhalter zur Aufnahme einer Probe, insbesondere für die spektroskopische Materialprüfung.

Die spektroskopische Materialprüfung ist eine Methode zur dynamischen, mechanischen Spektroskopie (DMTS, DMTA, DMA) für die Prüfung verschiedenster Werkstoffe. Hierbei wird der Prüfkörper - vorlastfrei oder statisch beansprucht - sinusförmigen mechanischen Anregungen bei Prüffrequenzen von 0,0001 Hz bis 1000 Hz ausgesetzt. Aus den Zeitabständen zwischen Impuls und Probenantwort lassen sich die viskoelastischen Eigenschaften des Probenmaterials ablesen, die wichtige Hinweise auf die Qualität des Produktes geben. Belastet werden können die Proben unter Zug-, Druck-, Biege- und Scherbeanspruchung.

Die Methode der DMTS wird sowohl im Bereich der Forschung und Entwicklung als auch im Bereich der Qualitätskontrolle angewendet. So können mittels der DMTS die dynamischen Eigenschaften unterschiedlichster Materialien wie Elastomere, Polymere, Verbundwerkstoffe, Metalle, Gläser, keramische Materialien, Biomaterialien, Lebensmittel, Kleber, plastische Massen und Flüssigkeiten festgestellt werden.

Zur Durchführung der Prüfung muss das Probenmaterial einer Prüfeinrichtung zugeführt werden. Die Zuführung des Probenmaterials in die Prüfeinrichtung erfolgt mit Hilfe eines sogenannten Probenzuführungssystems. Ein bekanntes Probenzuführungssystem weist ein Probenmagazin zur Aufnahme der Proben und ein Greifsystem auf. Das Greifsystem entnimmt dem Probenmagazin eine Probe und führt diese einer in der Prüfeinrichtung angeordneten Einspannvorrichtung zu. In der Einspannvorrichtung selbst ist ein Probenhalter eingespannt, der die Probe zur Prüfung aufnimmt. Je nach Art der Prüfung, also Zug-, Biegungs-, Scher- oder Druckprüfung bedarf es eines entsprechenden Probenhalters. Nach der Messung wird das Probenmaterial wieder aus der Prüfeinrichtung entfernt.

Nachteilig hierbei ist, dass es bisher nur möglich ist, eine Sorte von gleichartigen Proben, also sprich Zug-, Druck-, Biege-, oder Scherproben, nacheinander in die Prüfanlage einzulegen, zu messen und anschließend wieder zu entfernen. Demgemäß muss für die Prüfung einer anderen Sorte von Proben das Probenmagazin gewechselt werden. Ferner kann es notwendig sein, die Probenhalter zu reinigen oder auszutauschen, wenn dieser bei einer Messung verschmutzt wurde.

CN 201 215 537 Y zeigt einen Probenhalter für Metallzugexperimente, der auch unter speziellen Strahlungsbelastungen eingesetzt werden kann. Der Probenhalter weist eine Probenaufnahmevorrichtung zum Einspannen einer Probe auf. Zudem weist der Probenhalter ein Haltemittel auf, das zwei von der Probenaufnahmevorrichtung abstehende Zapfen aufweist. CN 201 188 077 Y offenbart einen Probenhalter für eine Torsionstestmaschine. Der Probenhalter weist zwei Vorsprünge auf, die von der Drehachse aus gesehen seitlich vorstehen. In EP 0 750 171 A2 wird ein Magazin zur Lagerung oder Bereitstellung mehrerer Abtastwerkzeuge beschrieben. Die Abtastwerkzeuge werden zum Beispiel zur Vermessung der Abmessungen mittels einer Koordinatenmessmaschine verwendet. DE 10 2009 010 431 A1 betrifft ein Magazin mit wenigstens einem Platz zur Aufnahme eines auswechselbaren Abtastwerkzeugs oder Messsensors eines Koordinatenmessgeräts.

JP S56 35043 U offenbart ein Magazin für Probenhalter für die Zugprüfung, wobei ein Greifarm jeweils den vordersten Probenhalter aus dem Magazin entnehmen kann. US 2009/0120308 A1 beschreibt eine Probentesteinrichtung, bei welcher mittels verschiedener Probenhalter Proben auf verschiedene Belastungsarten hin untersucht werden können.

Die Aufgabe der vorliegenden Erfindung besteht darin, die Vorrichtungen der eingangs genannten Art dahingehend zu verbessern, dass in der Prüfeinrichtung nacheinander Proben unterschiedlicher Geometrie und Belastungsarten (Zug, Druck, Biegung und Scherung) automatisch eingelegt, gemessen und wieder herausgenommen werden.

Zur **Lösung** dieser Aufgabe wird erfindungsgemäß eine Prüfeinrichtung nach Anspruch 1 vorgeschlagen.

Die Erfindung betrifft eine Prüfeinrichtung, welche einen Probenhalter zur Aufnahme einer Probe, ein Probenhaltermagazin und ein Probenzuführungssystem zur Zuführung der Probenhalter in die Prüfeinrichtung umfasst. Jeder der Probenhalter weist eine Probeaufnahmevorrichtung zum Einspannen der Probe unterschiedlicher Geometrien und Belastungsarten auf, wobei die Probenaufnahmevorrichtung ein Haltemittel aufweist, das wenigstens zwei von der Probenaufnahmevorrichtung abragende Zapfen aufweist. Das Probenhaltermagazin weist einen Trägerständer und eine Mehrzahl an dem Trägerständer angeordneten Aufnahmevorrichtungen zur Aufnahme des Haltemittels des Probenhalters auf. Das Probenzuführungssystem weist ein Greifmittel auf, das den Probenhalter an dem Haltemittel ergreift und einer in der Prüfeinrichtung angeordneten Einspannvorrichtung zuführt. Die Aufnahmevorrichtungen sind derart an dem Trägerständer angeordnet sind, dass die Probenhalter in beliebiger Reihenfolge der Prüfeinrichtung zugeführt werden können. Die Probenhalter sind verschiedenartig und zur Durchführung verschiedener Belastungsarten der Probe ausgebildet.

Der Probenhalter zur Aufnahme einer Probe weist eine Probenaufnahmevorrichtung zum Einspannen der Probe auf, der ein Haltemittel zugeordnet ist, das wenigstens zwei von der Probenaufnahmevorrichtung abragende Zapfen für ein Greifmittel aufweist. Der Probenhalter besitzt zwei von der Probenaufnahmevorrichtung abragenden Zapfen, an denen ein Greifsystem mittels seiner Greifzangen angreifen kann und so die bereits in dem eingespannte Probe als Gesamtvorrichtung einer Prüfeinrichtung zuführen und wieder entnehmen kann. Demgemäß ist es möglich, Proben unterschiedlicher Geometrien und Belastungsarten (Zug, Druck, Biegung und Scherung) der Prüfeinrichtung zuzuführen und aus selbiger wieder zu entfernen. Dadurch können Proben unterschiedlicher Geometrien und Belastungsarten in beliebiger Reihenfolge in die Prüfeinrichtung eingelegt werden. Da nach jeder Messung der Probenhalter mit darin eingespannten Proben entfernt wird und ein neuer Probenhalter samt Probe eingelegt wird, ist die Verschmutzungsgefahr, insbesondere bei der Messung der Grünklebrigkeit von anvulkanisiertem Gummi, reduziert.

In vorteilhafter Ausgestaltung weisen die Zapfen einen näherungsweise konusförmigen Endbereich auf. Der konusförmige Endbereich dient dazu, den Probenhalter in der Einspannvorrichtung der Prüfeinrichtung einzuspannen.

Vorteilhafterweise ragen die Zapfen von gegenüberliegenden Seiten der Probenaufnahmevorrichtung senkrecht ab. Hierdurch wird sichergestellt, dass die Proben beim Transport durch das Eigengewicht des Probenhalters nicht bereits mechanisch belastet werden.

Des Weiteren kann die Aufnahmevorrichtung zur Aufnahme des Probenhalters mit einer in die Aufnahmevorrichtung eingebrachten Aussparung zur Aufnahme des Haltemittels des Probenhalters vorgesehen sein. An der Aufnahmevorrichtung können Probenhalter mit Proben unterschiedlicher Geometrien und Belastungsarten aufgenommen werden.

Vorteilhafterweise weist die Aufnahmevorrichtung einen ersten Aufnahmewinkel und einen zweiten Aufnahmewinkel auf, wobei jeder Aufnahmewinkel einen näherungsweise L-förmigen Querschnitt mit einem ersten Schenkel und einem zweiten Schenkel aufweist.

In die ersten Schenkel der Aufnahmewinkel ist vorteilhaft jeweils eine Aussparung eingebracht. Demgemäß werden beide von der Probenaufnahmevorrichtung abragende Zapfen von der Aufnahmevorrichtung aufgenommen.

In einer vorteilhaften Ausgestaltung sind die Aussparungen von einer ersten Vertiefung umgeben. Vorteilhaft weist der erste Aufnahmewinkel eine in die erste Vertiefung eingebrachte zweite Vertiefung auf. Dabei ist die erste Vertiefung vorteilhaft näherungsweise rechteckförmig und die zweite Vertiefung näherungsweise kreisförmig zur formschlüssigen Aufnahme einer Probenaufnahmevorrichtung ausgebildet. In die Vertiefungen liegt die Probenaufnahmevorrichtung ein, so dass der Prüfkörper nicht durch das Eigengewicht des Probenhalters mechanisch belastet wird und zu einem Kriechen neigt. Folglich können dünne Filmproben, aber auch Fasern, Gummistreifen, harte Kunststoffe, Verbundwerkstoffe oder auch Metalle in einem Probenhalter eingespannt und an der Aufnahmevorrichtung angeordnet werden. Des Weiteren wird durch die Vertiefungen eine sichere Aufnahme der Probenhalter innerhalb der Aufnahmevorrichtung gewährleistet.

Das Probenhaltermagazin zeichnet sich dadurch aus, dass Proben unterschiedlicher Geometrien und Formen eingespannt in Probenhaltern als Gesamtvorrichtung an dem Probenhaltermagazin anordenbar sind, wobei die Gesamtvorrichtung der Prüfeinrichtung zugeführt wird. Dementsprechend können Proben unterschiedlicher Geometrien und Formen in beliebiger Reihenfolge in die Prüfeinrichtung eingelegt werden.

In einer vorteilhaften Ausgestaltung weist das Greifsystem zwei voneinander beabstandete Greifzangen auf, die die Haltemittel des Probenhalters ergreifen.

Bei einer weiteren vorteilhaften Ausgestaltung der Erfindung ist das Greifsystem um seine Längsachse schwenkbar.

Des Weiteren kann die Einspannvorrichtung zur Aufnahme des Probenhalters an dem Haltemittel in der Prüfeinrichtung zur spektroskopischen Materialprüfung angeordnet sein.

Nachfolgend wird die Erfindung anhand von Ausführungsbeispielen näher erläutert, die in den Zeichnungen schematisch dargestellt sind. Hierbei zeigen:
- Fig. 1: eine Seitenansicht eines erfindungsgemäßen Probenhaltermagazins mit daran angeordneten erfindungsgemäßen Probenhaltern für Proben unterschiedlicher Geometrien und Belastungsarten;
- Fig. 2: eine schematische Darstellung eines erfindungsgemäßen Probenhalters mit einer eingespannten Druckprobe;
- Fig. 3: eine schematische Darstellung eines erfindungsgemäßen Probenhalters gemäß einer zweiten Ausführungsform mit einer eingespannten Zugprobe;
- Fig. 4: eine schematische Darstellung eines erfindungsgemäßen Probenhalters gemäß einer dritten Ausführungsform mit einer eingespannten Scherprobe;
- Fig. 5: eine schematische Darstellung eines erfindungsgemäßen Probenhalters gemäß einer vierten Ausführungsform mit einer eingespannten Biegeprobe;
- Fig. 6: eine perspektivische Ansicht eines ersten Schenkels einer erfindungsgemäßen Aufnahmevorrichtung;
- Fig. 7: eine perspektivische Ansicht eines zweiten Schenkels einer erfindungsgemäßen Aufnahmevorrichtung;
- Fig. 8: eine schematische Seitenansicht eines erfindungsgemäßen Probenzuführungssystems und einer in einer Prüfeinrichtung angeordneten erfindungsgemäßen Einspannvorrichtung.

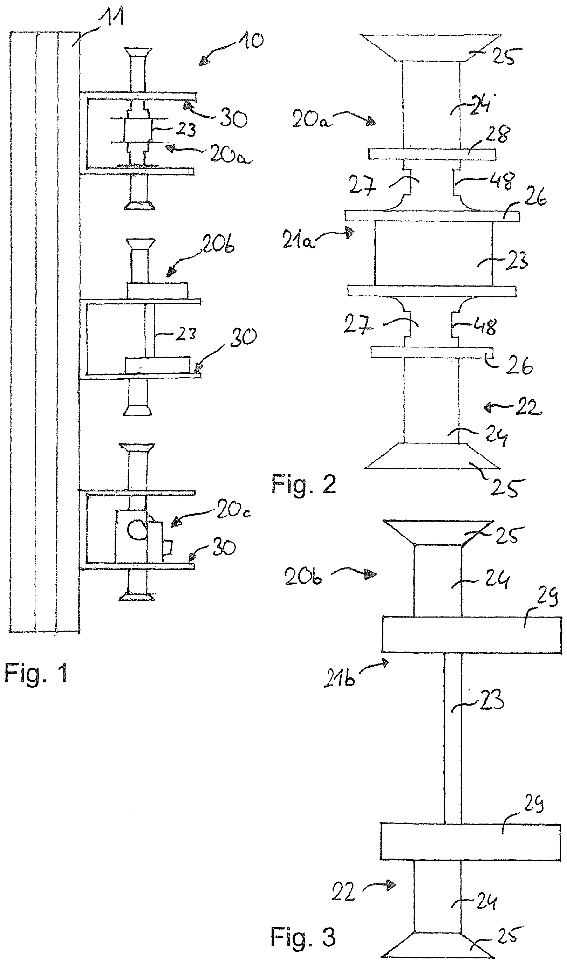

Fig. 1 zeigt ein Probenhaltermagazin 10 zur Aufnahme einer Mehrzahl von unterschiedlichen Probenhaltern 20. Die Probenhalter 20 dienen zur Aufnahme einer Probe 23 für die spektroskopische Materialprüfung.

Das Probenhaltermagazin 10 weist einen Trägerständer 11 und mehrere an dem Trägerständer 11 angeordnete Aufnahmevorrichtungen 30 zur formschlüssigen Aufnahme der Probenhalter 20 auf. Die Aufnahmevorrichtungen 30 sind an dem Trägerständer 11 befestigt. An dem Probenhaltermagazin 10 sind drei verschiedene Probenhalter 20 befestigt, nämlich ein Probenhalter 20a für die Druckprüfung, ein Probenhalter 20b für die Zugprüfung und ein Probenhalter 20c für die Scherprüfung. Ferner kann an dem Probenhaltermagazin 10 ein in Fig. 1 nicht dargestellter Probenhalter 20d für die Biegeprüfung befestigt werden.

In den Fig. 2 bis 5 sind die Probenhalter 20 für unterschiedliche Belastungsarten näher gezeigt.

Fig. 2 zeigt einen Probenhalter 20a für eine Druckprüfung. Der Probenhalter 20a weist eine Probenaufnahmevorrichtung 21a und ein Haltemittel 22 auf. In die Probenaufnahmevorrichtung 21a ist eine Probe 23 für die Druckprüfung eingespannt, wobei unterschiedliche Probenmaterialien aufgenommen werden können. Die Probenaufnahmevorrichtung 21a weist zwei Halteplatten 26 auf, zwischen denen die Probe 23 aufgenommen ist. An die Halteplatten 26 schließt sich jeweils ein Übergangsbereich 27 mit daran eingebrachten Einschnürungen 48 an, die als Schlüsselflächen für die Montage dienen. An die Übergangsbereiche 27 grenzt jeweils eine Platte 28 an, wobei sich an die Oberseiten der Platten 28 das Haltemittel 22 anschließt. Das Haltemittel 22 weist zwei von den Platten 28 senkrecht abragende Zapfen 24 auf. Die Zapfen 24 haben einen konusförmigen Endbereich 25. Für die Druckprüfung wird die Probe 23 zur Festlegung mit den beiden Halteplatten 26 verklebt.

Fig. 3 zeigt einen Probenhalter 20b für eine Zugprüfung. Der Probenhalter 20b weist eine Probenaufnahmevorrichtung 21b und das Haltemittel 22 auf. Die Probenaufnahmevorrichtung 21b weist zwei Einspannklemmen 29 auf. In die Einspannklemmen 29 wird eine Probe 23 jeweils endseitig eingespannt, wie in Fig. 3 ersichtlich ist. An die Oberseite der Einspannklemmen 29 schließt sich das Haltemittel 22 an. Das Haltemittel 22 weist zwei von der Oberseite der Einspannklemmen 29 senkrecht abragende Zapfen 24 auf. Die Zapfen 24 haben einen konusförmigen Endbereich 25.

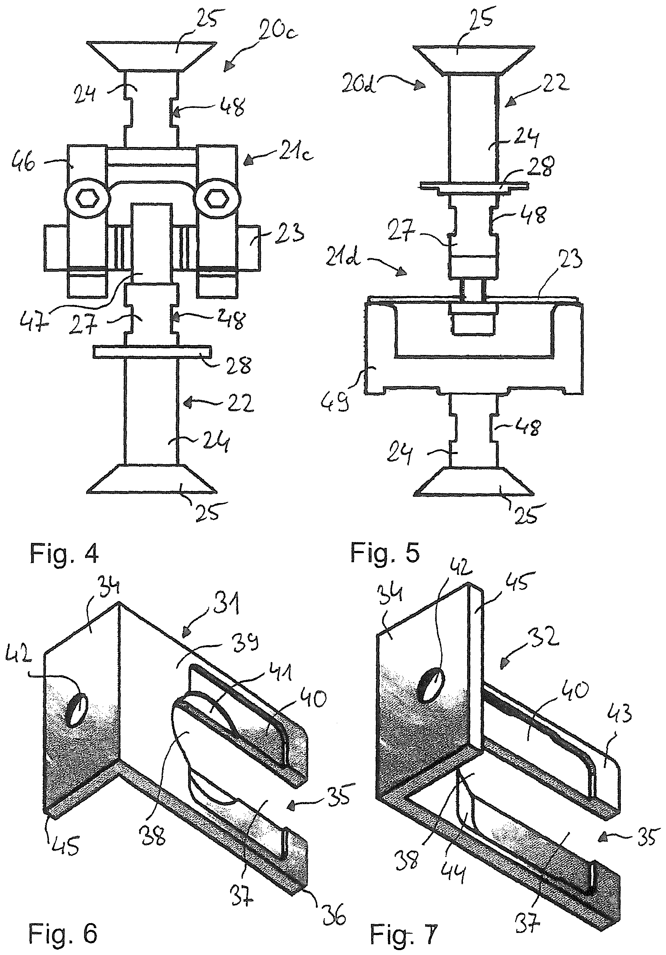

In Fig. 4 ist ein Probenhalter 20c für eine Scherprüfung gezeigt. Der Probenhalter 20c weist eine Probenaufnahmevorrichtung 21c und das Haltemittel 22 auf. In die Probenaufnahmevorrichtung 21c ist eine Probe 23 eingespannt. Die Probenaufnahmevorrichtung 21c weist einen Halter 46, der näherungsweise U-förmig ausgebildet ist, auf. Die Probe 23 ist jeweils endseitig an Schenkeln des Halters 46 eingespannt, wie aus Fig. 4 ersichtlich ist. Ferner weist die Probenaufnahmevorrichtung 21c eine Einspannklemme 47 auf, die zwischen den Schenkeln des Halters 46 angeordnet ist und die Probe 23 ebenfalls einspannt. An die Einspannklemme 47 schließt sich ein Übergangsbereich 27 mit einer Einschnürung 48 an, wobei an dem Übergangsbereich 27 eine Platte 28 angeordnet ist. An die Oberseite des Halters 46 und an die Oberseite der Platte 28 schließt sich das Haltemittel 22 an. Das Haltemittel 22 weist zwei senkrecht abragende Zapfen 24 auf, die einen konusförmigen Endbereich 25 haben. In den von dem Halter 46 abragenden Zapfen 24 ist ebenfalls eine Einschnürung 48 eingebracht. Die Einschnürungen 48 dienen als Schlüsselfläche zur Montage.

Fig. 5 zeigt einen Probenhalter 20d für eine Biegeprüfung. Der Probenhalter 20d weist eine Probenaufnahmevorrichtung 22d und das Haltemittel 22 auf. Die Probenaufnahmevorrichtung 22d nimmt eine Probe 23 auf. Hierzu weist die Probenaufnahmevorrichtung 22d ein näherungsweise U-förmiges Auflager 49, einen Stempel 50 und eine Auflageplatte 51 auf. In das Auflager 49 sind Aussparungen 53 zum formschlüssigen Eingriff in die Aufnahmevorrichtung 30 eingebracht. Der Stempel 50 und die Auflageplatte 51 sind jeweils endseitig über zwei Federn 52 derart miteinander verbunden, dass zwischen Stempel 50 und Auflageplatte 51 ein Freiraum verbleibt. Die Probe 23 wird zwischen dem Stempel 50 und der Auflageplatte 51 derart angeordnet, dass die Probe 23 auf Schenkeln des Auflagers 49 und auf der Auflageplatte 51 aufliegt, wie in Fig. 5 gezeigt ist. An den Stempel 50 schließt sich ein Übergangsbereich 27 mit einer darin eingebrachten Einschnürung 48 an. Der Übergangsbereich 27 wird von einer Platte 28 begrenzt. An die Platte 28 und dem Auflager 49 schließt sich das Haltemittel 22 an. Das Haltemittel 22 umfasst zwei senkrecht abragende Zapfen 24, die jeweils endseitig einen konusförmigen Endbereich 25 aufweisen. In den von dem Halter 46 abragenden Zapfen 24 ist ebenfalls eine Einschnürung 48 eingebracht, die als Schlüsselfläche für die Montage dienen.

Wie aus Fig. 1 sowie Fig. 6 und 7 ersichtlich ist, weist die Aufnahmevorrichtung 30 einen ersten Aufnahmewinkel 31 und einen zweiten Aufnahmewinkel 32 auf. Beide Aufnahmewinkel 31, 32 haben jeweils einen ersten Schenkel 33 und einen zweiten Schenkel 34, so dass die beiden Aufnahmewinkel 31, 32 einen näherungsweise L-förmigen Querschnitt haben.

Wie aus Fig. 6 ersichtlich ist, ist in den ersten Schenkel 33 des ersten Aufnahmewinkels 31 eine Aussparung 35 eingebracht. Die Aussparung 35 erstreckt sich von einer Stirnseite 36 des ersten Schenkels 33 in Richtung des zweiten Schenkels 34. Die Aussparung 35 hat einen länglichen Abschnitt 37 und einen kreisförmigen Abschnitt 38. In eine Außenseite 39 des ersten Schenkels 33 ist eine erste Vertiefung 40 eingebracht. Die erste Vertiefung 40 weist eine rechteckförmige Kontur auf. Ferner ist in die erste Vertiefung 40 und im Bereich des kreisförmigen Abschnitts 38 eine zweite Vertiefung 41 eingebracht. Die zweite Vertiefung 41 ist kreisförmig ausgebildet. In den zweiten Schenkel 34 ist eine Öffnung 42 zur Durchführung eines nicht näher dargestellten Befestigungsmittels eingebracht. Über die Öffnung 42 kann der erste Aufnahmewinkel 31 an dem Trägerständer 11 befestigt werden.

Gemäß Fig. 7 weist der zweite Aufnahmewinkel 32 einen ersten Schenkel 33 und einen zweiten Schenkel 34 auf. In den ersten Schenkel 33 des zweiten Aufnahmewinkels 32 ist die Aussparung 35 eingebracht. Die Aussparung 35 weist ebenfalls den länglichen Abschnitt 37 und den kreisförmigen Abschnitt 38. Des Weiteren ist auf eine Innenseite 43 des ersten Schenkels 33 die erste Vertiefung 40 eingebracht. Die erste Vertiefung 40 des zweiten Aufnahmewinkels 20 weist eine näherungsweise rechteckförmige Grundform auf, wobei in Richtung des zweiten Schenkels 34 die Vertiefung in eine Schräge 44 übergeht. In den zweiten Schenkel 34 ist eine Öffnung 42 zur Durchführung eines nicht näher dargestellten Befestigungsmittels zur Befestigung des zweiten Aufnahmewinkels 32 an dem Trägerständer 11 eingebracht.

Wie in Fig. 1 ersichtlich ist, werden die beiden Aufnahmewinkel 31, 32 derart an dem Trägerständer 11 angeordnet, dass Stirnflächen 45 der zweiten Schenkel 34 zueinander in Kontakt stehen und die Aufnahmevorrichtung 30 näherungsweise einen U-förmigen Querschnitt bildet.

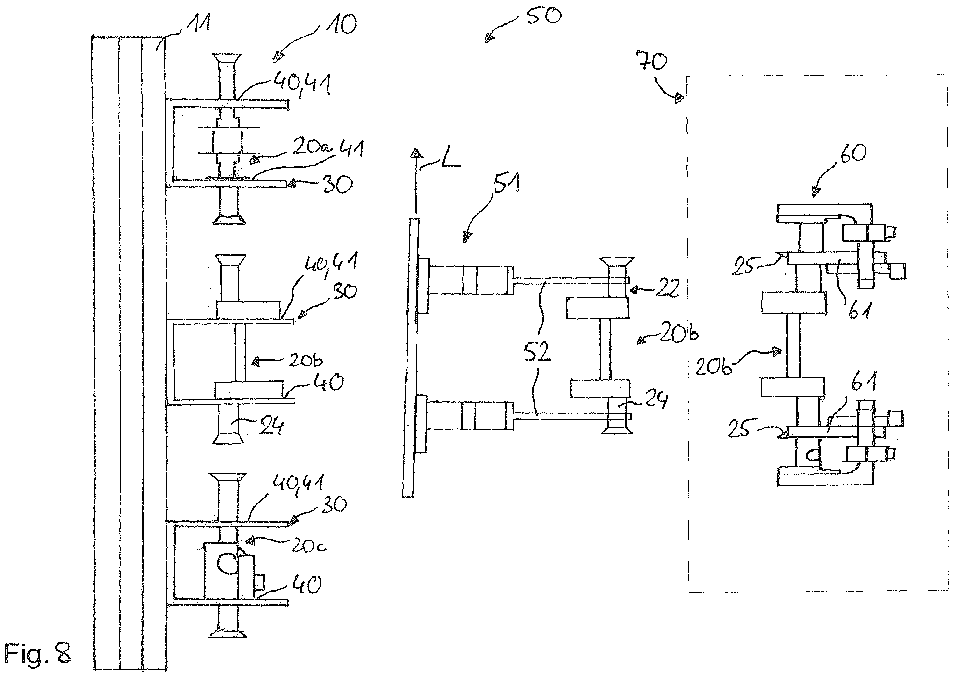

In Fig. 8 ist ein Probenzuführungssystem 50 dargestellt. Das Probenzuführungssystem weist das Probenhaltermagazin 10 mit daran angeordneten Probenhaltern 20 für unterschiedliche Probenarten gemäß den Fig. 2 bis 5 und ein Greifsystem 51 auf. Das Greifsystem 51 ist mit zwei voneinander beabstandeten Greifzangen 52 zum Greifen des Haltemittels 22 versehen. Das Greifsystem 51 ist um eine Längsachse L schwenkbar. Die an dem Greifsystem 51 angebrachten Greifzangen 52 sind mechanisch, elektromechanisch oder hydraulisch steuerbar.

Fig. 8 zeigt schematisch eine Prüfeinrichtung 70 zur dynamischen, mechanischen Spektroskopie. Innerhalb der Prüfeinrichtung 70 ist eine Einspannvorrichtung 60 zur Aufnahme der Probenhalter 20 angeordnet. Zum Einspannen der Probenhalter 20 weist die Einspannvorrichtung 60 verschwenkbare Einspannmittel 61 auf, die die Probenhalter 20 an ihren Haltemitteln 22, insbesondere an den konusförmigen Endbereichen 25, einspannen. Die Funktionsweise der Einspannmittel 61 kann mechanisch, elektromechanisch oder hydraulisch sein.

Im nachfolgenden wird die Aufnahme der Probenhalter 20 in der Aufnahmevorrichtung 30 erläutert. Die Aussparung 35 der Aufnahmevorrichtung 30 dient dazu, die Zapfen 24 in die Aufnahmevorrichtung 30 einzuführen. Die Zapfen 24 werden so weit in Richtung des zweiten Schenkels 34 in die Aussparung 35 eingeschoben, bis die Probenaufnahmevorrichtungen 21 und/oder die Platten 28 formschlüssig in die erste Vertiefung 40 und/oder zweite Vertiefung 41 eingreifen. Bei dem Probenhalter 20a liegen die Platten 28 formschlüssig in die zweite Vertiefung 41 des ersten Aufnahmewinkels 31 und in die erste Vertiefung 40 des zweiten Aufnahmewinkels 32 ein. Die Probenaufnahmevorrichtung 21b des Probenhalters 20b greift formschlüssig in die ersten Vertiefungen 40 ein. Bei dem Probenhalter 20c liegt die Platte 28 in der zweiten Vertiefung 41 des ersten Aufnahmewinkels 31 und der Halter 46 in der ersten Vertiefung 40 des zweiten Aufnahmewinkels 32 ein. Bei dem Probenhalter 20d liegt die Platte 28 formschlüssig in der zweiten Vertiefung 41 des ersten Aufnahmewinkels 31 ein und das Auflager 49 greift mit seinen Aussparungen 53 formschlüssig in den ersten Schenkel 33 des zweiten Aufnahmewinkels 32 ein.
Im Folgenden wird die Zuführung eines Probenhalters 20 zu der in der der Prüfeinrichtung angeordneten Einspannvorrichtung 60 und das Entfernen des Probenhalters 20 aus der Einspannvorrichtung 60 näher erläutert. Das Greifsystem 51 positioniert sich derart vor dem Probenhalter 20, dass die Greifzangen 52 die Haltemittel 22, insbesondere die Zapfen 24, greifen können. Nachdem die Greifzangen 52 die Zapfen 24 ergriffen haben, hebt das Greifsystem 51 den Probenhalter 20 etwas, indem sich das Greifsystem 51 in Richtung der eingezeichneten Längsachse L bewegt. Hierdurch wird die Probenaufnahmevorrichtung 21 aus den Vertiefungen 40, 41 entfernt. Anschließend fährt das Greifsystem 51 samt Probenhalter 20 in Horizontalrichtung weg von der Aufnahmevorrichtung 30. Danach schwenkt das Greifsystem 51 näherungsweise um 270° um seine Längsachse L, um den Probenhalter 20 der in der Prüfeinrichtung 70 angeordneten Einspannvorrichtung 60 zuzuführen. Nach dem Schwenkvorgang bewegt sich das Greifsystem 51 in horizontaler Richtung auf die Einspannvorrichtung 60 zu.

Die Einspannmittel 61 sind derart verschwenkbar gelagert, dass die Einspannmittel 61 bei Einführen der konusförmigen Endbereiche 25 verschwenken und anschließend wieder zurückschwenken, um den Probenhalter 20 in der Einspannvorrichtung 60 einzuspannen. Im Anschluss daran wird die Messung an der Probe vorgenommen. Nach Beendigung der Messung greift das Greifsystem 51 den Probenhalter 20 an seinen Zapfen 24 und entfernt ihn aus der Einspannvorrichtung 60. Schließlich führt das Greifsystem 51 den Probenhalter 20 wieder der Aufnahmevorrichtung 30 zu.

Der erfindungsgemäße Probenhalter 20 macht es möglich, nacheinander Proben unterschiedlicher Geometrien und Belastungsarten (Zug, Druck, Biegung, Scherung) automatisch in die Prüfeinrichtung 70 einzulegen, zu messen und wieder zu entfernen. Manuelles Reinigen der Probenhalter 20 oder Umbau der Probenhalter 20 ist nicht notwendig.

**Bezugszeichenliste**

| | | | |
|---|---|---|---|
| 10 | Probenhaltermagazin | 51 | Auflageplatte |
| 11 | Trägerständer | 52 | Feder |
| 20a | Probenhalter für Druckprüfung | 53 | Aussparung |
| | | 30 | Aufnahmevorrichtung |
| 20b | Probenhalter für Zugprüfung | 31 | erster Aufnahmewinkel |
| 20c | Probenhalter für Scherprüfung | 32 | zweiter Aufnahmewinkel |
| | | 33 | erster Schenkel |
| 20d | Probenhalter für Biegeprüfung | 34 | zweiter Schenkel |
| | | 35 | Aussparung |
| 21a | Probenaufnahmevorrichtung für Druckprüfung | 36 | Stirnseite |
| | | 37 | länglicher Abschnitt |
| 21b | Probenaufnahmevorrichtung für Zugprüfung | 38 | kreisförmiger Abschnitt |
| | | 39 | Außenseite |
| 21c | Probenaufnahmevorrichtung für Scherprüfung | 40 | erste Vertiefung |
| | | 41 | zweite Vertiefung |
| 21d | Probenaufnahmevorrichtung für Biegeprüfung22 Haltemittel | 42 | Öffnung |
| | | 43 | Innenseite |
| 23 | Probe | 44 | Schräge |
| 24 | Zapfen | 45 | Stirnfläche |
| 25 | konusförmiger Endbereich | 50 | Probenzuführungssystem |
| 26 | Halteplatte | 51 | Greifsystem |
| 27 | Übergangsbereich | 52 | Greifzangen |
| 28 | Platte | | |
| 29 | Einspannklemme | 60 | Einspannvorrichtung |
| 46 | Halter | 61 | Einspannmittel |
| 47 | Einspannklemme | 70 | Prüfeinrichtung |
| 48 | Einschnürungen | | |
| 49 | Auflager | L | Längsachse |
| 50 | Stempel | | |

## Patentansprüche

1. Prüfeinrichtung (70), umfassend
Probenhalter (20) zur Aufnahme einer Probe (23),
ein Probenhaltermagazin (10) und
ein Probenzuführungssystem (50) zur Zuführung der Probenhalter (20) in die Prüfeinrichtung (70),
wobei jeder der Probenhalter (20) eine Probeaufnahmevorrichtung (21) zum Einspannen der Probe (23) unterschiedlicher Geometrien und Belastungsarten aufweist, wobei die Probenaufnahmevorrichtung (21) ein Haltemittel (22) aufweist, das wenigstens zwei von der Probenaufnahmevorrichtung (21) abragende Zapfen (24) aufweist,
wobei das Probenhaltermagazin (10) einen Trägerständer (11) und eine Mehrzahl an dem Trägerständer (11) angeordneten Aufnahmevorrichtungen (30) zur Aufnahme des Haltemittels (22) des Probenhalters (20) aufweist, wobei das Probenzuführungssystem (50) ein Greifmittel (51) aufweist, das den Probenhalter (20) an dem Haltemittel (22) ergreift und einer in der Prüfeinrichtung (70) angeordneten Einspannvorrichtung (60) zuführt, **dadurch gekennzeichnet,**
**dass** die Aufnahmevorrichtungen (30) derart an dem Trägerständer (11) angeordnet sind, dass die Probenhalter(20) in beliebiger Reihenfolge der Prüfeinrichtung (70) zugeführt werden können,
und **dass** die Probenhalter (20) verschiedenartig sind und zur Durchführung verschiedener Belastungsarten der Probe (23) ausgebildet sind.

2. Prüfeinrichtung (70) nach Anspruch 1, **dadurch gekennzeichnet, dass** die Probenhalter (20) ein Probenhalter (20a) für eine Druckprüfung, ein Probenhalter (20b) für eine Zugprüfung, ein Probenhalter (20c) für eine Scherprüfung oder ein Probenhalter (20d) für eine Biegeprüfung umfassen.

3. Prüfeinrichtung (70) nach Anspruch 1 oder 2, **dadurch gekennzeichnet, dass** die Zapfen (24) des Probenhalters (20) einen näherungsweise konusförmigen Endbereich (25) aufweisen.

4. Prüfeinrichtung (70) nach einem der vorangehenden Ansprüche, **dadurch gekennzeichnet, dass** die Zapfen (24) des Probenhalters (20) von gegenüber liegenden Seiten der Probenaufnahmevorrichtung (21) senkrecht abragen.

5. Prüfeinrichtung (70) nach einem der vorangehenden Ansprüche, **dadurch gekennzeichnet, dass** die Aufnahmevorrichtung (30) einen ersten Aufnahmewinkel (31) und einen zweiten Aufnahmewinkel (32) aufweist, wobei jeder Aufnahmewinkel (31, 32) einen näherungsweise L-förmigen Querschnitt mit einem ersten Schenkel (33) und einem zweiten Schenkel (34) aufweist.

6. Prüfeinrichtung (70) nach Anspruch 5, **dadurch gekennzeichnet, dass** in die ersten Schenkeln (33) der Aufnahmewinkel (31, 32) jeweils eine Aussparung (35) eingebracht ist.

7. Prüfeinrichtung (70) nach Anspruch 6, **dadurch gekennzeichnet, dass** die Aussparungen (35) von einer ersten Vertiefung (40) umgeben sind.

8. Prüfeinrichtung (70) nach Anspruch 7, **dadurch gekennzeichnet, dass** der erste Aufnahmewinkel (31) eine in die erste Vertiefung (40) eingebrachte zweite Vertiefung (41) aufweist.

9. Prüfeinrichtung (70) nach einem der vorhergehenden Ansprüche, **dadurch gekennzeichnet, dass** das Greifmittel (51) des Probenzuführungssystems (50) zwei voneinander beabstandete Greifzangen (52) aufweist, die die Haltemittel (22) des Probenhalters (20) ergreifen.

10. Prüfeinrichtung (70) nach einem der vorhergehenden Ansprüche, **dadurch gekennzeichnet, dass** das Greifmittel (51) des Probenzuführungssystems (50) um seine Längsachse (L) schwenkbar ist.

## Claims

1. A test unit (70), comprising
specimen holders (20) for mounting a specimen (23),
a specimen holder magazine (10) and
a specimen feed system (50) for feeding the specimen holders (20) to the test unit (70),
wherein each of the specimen holders (20) includes a specimen mounting device (21) for clamping the specimen (23) of diverse geometry and load types,
wherein the specimen mounting device (21) includes a holding means (22) that comprises at least two pegs (24), which protrude from the specimen mounting device (21),
wherein the specimen holder magazine (10) includes a carrier stand (11) and a plurality of mounting devices (30) disposed at the carrier stand (11) for mounting the holding means (22) of the specimen holder (20),
wherein the specimen feed system (50) includes a gripping system (51) which grips the specimen holder (20) on the holding means (22) and feeds it to a clamping device (60) which is located in the test unit (70),
**characterized in that** the mounting devices (30) are disposed at the carrier stand (11) in such a way that the specimen holders (20) can be fed to the test unit (70) in an arbitrary sequence and that the specimen holders (20) are diverse and configured for performing different load types of the specimen (23).

2. The test unit (70) according to claim 1, **characterized in that** the specimen holders (20) include a specimen holder (20a) for compressive test, a specimen holder (20b) for tensile test, a specimen holder (20c) for shear test or a specimen holder (20d) for bending test.

3. The test unit (70) according to claim 1 or 2, **characterized in that** the pegs (24) have an approximately conically shaped end region (25).

4. The test unit (70) according to any of the preceding claims, **characterized in that** the pegs (24) of the specimen holder (20) protrude perpendicularly from opposite sides of the specimen mounting device (21).

5. The test unit (70) according to any of the preceding claims, **characterized in that** the mounting device (30) has a first mounting angle (31) and a second mounting angle (32), each mounting angle (31, 32) having an approximately L-shaped cross section with a first leg (33) and a second leg (34).

6. The test unit (70) according to claim 5, **characterized in that** a recess (35) is formed into each of the first legs (33) of the mounting angles (31, 32).

7. The test unit (70) according to claim 6, **characterized in that** the recesses (35) are surrounded by a first depression (40).

8. The test unit (70) according to claim 7, **characterized in that** the first mounting angle (31) has a second depression (41) which is formed into the first depression (40).

9. The test unit (70) according to any of the preceding claims, **characterized in that** the gripping system (51) of the specimen feed system (50) has two gripping pliers (52) at a distance from one another which grip the holding means (22) of the specimen holder (20).

10. The test unit (70) according to any of the preceding claims, **characterized in that** the gripping system (51) of the specimen feed system (50) is pivotable about its longitudinal axis (L).

## Revendications

1. Dispositif d'essai (70) comprenant
un porte-échantillon (20) pour la réception d'un échantillon (23),
un magasin de porte-échantillon (10) et
un système d'alimentation d'échantillon (50) pour l'alimentation des porte-échantillons (20) dans le dispositif d'essai (70),
dans lequel chacun des porte-échantillons (20) présente un dispositif de réception d'échantillon (21) pour le serrage de l'échantillon (23) de différentes géométries et types de charges, dans lequel le dispositif de réception d'échantillon (21) présente un moyen de retenue (22) qui présente au moins deux tenons (24) dépassant du dispositif de réception d'échantillon (21), dans lequel le magasin de porte-échantillon (10) présente un support de monture (11) et une pluralité de dispositifs de réception (30) agencés sur le support de monture (11) pour la réception du moyen de retenue (22) du porte-échantillon (20), dans lequel le système d'alimentation d'échantillon (50) présente un moyen de préhension (51) qui saisit le porte-échantillon (20) sur le moyen de retenue (22) et l'amène à un dispositif de serrage (60) agencé dans le dispositif d'essai (70),
**caractérisé en ce que**
les dispositifs de réception (30) sont agencés sur le support de monture (11) de telle manière que les porte-échantillons (20) puissent être amenés dans un ordre quelconque au dispositif d'essai (70),
et les porte-échantillons (20) sont de type différent et sont réalisés pour la réalisation de différents types de charge de l'échantillon (23).

2. Dispositif d'essai (70) selon la revendication 1, **caractérisé en ce que** les porte-échantillons (20) comportent un porte-échantillon (20a) pour un essai de pression, un porte-échantillon (20b) pour un essai de traction, un porte-échantillon (20c) pour un essai de cisaillement ou un porte-échantillon (20d) pour un essai de flexion.

3. Dispositif d'essai (70) selon la revendication 1 ou 2, **caractérisé en ce que** les tenons (24) du porte-échantillon (20) présentent une zone d'extrémité (25) approximativement en forme de cône.

4. Dispositif d'essai (70) selon l'une quelconque des revendications précédentes, **caractérisé en ce que** les tenons (24) du porte-échantillon (20) dépassent verticalement de côtés opposés du dispositif de réception d'échantillon (21).

5. Dispositif d'essai (70) selon l'une quelconque des revendications précédentes, **caractérisé en ce que** le dispositif de réception (30) présente un premier angle de réception (31) et un second angle de réception (32), dans lequel chaque angle de réception (31, 32) présente une section transversale approximativement en forme de L avec une première branche (33) et une seconde branche (34).

6. Dispositif d'essai (70) selon la revendication 5, **caractérisé en ce que** respectivement un évidement (35) est introduit dans les premières branches (33) des angles de réception (31, 32).

7. Dispositif d'essai (70) selon la revendication 6, **caractérisé en ce que** les évidements (35) sont entourés par une première cavité (40).

8. Dispositif d'essai (70) selon la revendication 7, **caractérisé en ce que** le premier angle de réception (31) présente une seconde cavité (41) introduite dans la première cavité (40).

9. Dispositif d'essai (70) selon l'une quelconque des revendications précédentes, **caractérisé en ce que** le moyen de préhension (51) du système d'alimentation d'échantillon (50) présente deux pinces de préhension (52) espacées l'une de l'autre qui saisissent les moyens de retenue (22) du porte-échantillon (20).

10. Dispositif d'essai (70) selon l'une quelconque des revendications précédentes, **caractérisé en ce que** le moyen de préhension (51) du système d'alimentation d'échantillon (50) peut être pivoté autour de son axe longitudinal (L).
